# EUROPEAN PATENT SPECIFICATION

(11) **EP 3 093 630 B1**
(45) Date of publication and mention of the grant of the patent: **27.09.2017**
(21) Application number: 15382247.3
(22) Date of filing: 12.05.2015
(51) Int. Cl.: G01G 17/08, G01G 21/28, A01K 5/02, A01K 29/00

(54) **FEEDER, SYSTEM AND METHOD FOR THE REAL-TIME MEASUREMENT OF THE GROWTH AND/OR EVOLUTION OF THE WEIGHT OF ANIMALS**
VORRICHTUNG, SYSTEM UND VERFAHREN ZUR ECHTZEITMESSUNG DES WACHSTUMS UND/ODER ENTWICKLUNG DES GEWICHTS VON TIEREN
MANGEOIRE, SYSTÈME ET PROCÉDÉ POUR LA MESURE EN TEMPS RÉEL DE LA CROISSANCE ET/OU L'ÉVOLUTION DU POIDS D'ANIMAUX

(43) Date of publication of application: 16.11.2016
(73) Proprietor: Exafan, S.A., 50840 San Mateo de Gallego (Zaragoza) (ES); Universitat de Lleida, 25003 Lleida (ES)
(72) Inventor: Pomar Gomà, Jesús, 25003 Lleida (ES)
(74) Representative: Capitán García, Maria Nuria

(56) References cited:
- GB-A- 2 350 829
- US-A1- 2011 306 844
- US-A1- 2012 316 797
- US-B1- 6 868 804

## Description

### FIELD OF THE INVENTION

The present invention relates to a feeder, system and method for the real-time measurement of the growth of animals or the evolution of their weight over short time intervals.

The system is designed preferably for four-legged animals and intends to monitor growth by the differences in the weight measurements obtained each time the animal feeds, preferably by the difference in weight from one day to another. This allows controlling the composition and/or amount of feed supplied to the animal according to its growth and/or change in weight.

The present invention is characterised by the nature and arrangement of the various technical elements which when conveniently combined allow obtaining real-time weight measurements for the animals in a simple manner without having to confine and isolate the animals in order to perform the measurements.

Therefore, the present invention belongs to the field of animal husbandry, and specifically to means for weighing and controlling their nutrition.

### BACKGROUND OF THE INVENTION

In general, apart from manual weighing systems (which require the participation of at least one operator) all known automatic weighing systems involve placing the animal in a cubicle or enclosure specifically designed for said process, as shown in the figures of documents US8584619 and US7129423. This action requires at least a system with gates that open automatically in the presence of an animal and can only be used in farms where the animals are together in large numbers, such that the animals are forced to pass through a corridor (in which the weighting system is placed), normally when they are going to be fed. Although these systems have the advantage of weighing the entire animal, they have some drawbacks: (i) they can only be used in farms in which the animals are handled in large groups (which currently is not a common situation); (ii) they require the animal to learn how the system operates (approaching, waiting for the gates to open, etc.) and some animals cannot learn this, and (iii) they inevitably represent a stress factor for the animal as it requires entering a narrow corridor and being locked in for a time until the exit door opens.

The system proposed by the invention does not have these drawbacks as it weighs the animals without causing them stress, without requiring a learning process at the feeder, without any enclosure, and can be used with both small and large groups of animals.

Several devices for measuring the growth of animals and controlling their nutrition are known in the prior art. The following patents are cited:

### US6868804 B1

This document discloses a system for measuring the weight of an animal in real time, comprising a weighing platform on which the animal places its front legs. It also identifies the animal and transmits the captured signal to a computer.

### WO9731526 A1

This document discloses a method for treating animals, storing a predetermined weight pattern for animals or groups of animals for a relatively long time in a computer memory.

### US4617876 A

This document discloses a system that identifies an animal by an ear tag, also including a transmitter that sends an identification code signal to a signal receiver mounted adjacent to a water bowl placed next to a weighing device in a stall.

### NL1024639C2

This document discloses a feeding device comprising means for offering food to an animal and means for weighting the food of the animals by the device. The weighting means comprise a weighing plate (9) placed immediately adjacent to and under the feeding tray.

However, all of these systems, despite achieving their intended goal, have drawbacks regarding the weighing means used as commercial scales are not usable. In addition, the load cells are exposed to highly corrosive environments and must therefore be within a sealed system, which hinders a correct weighing and, in addition, if forces are transmitted to the walls of the enclosure the weighing accuracy is affected. Moreover, the scales are subject to continuous vibrations and perturbations, so that the design of the sealed body associated with the weighing platform must be carefully designed.

Consequently, the object of the present invention is to provide a system for real-time measurement of the growth of animals based on weighing the animal that overcomes the aforementioned drawbacks, developing a system and method as described below, the essence of which is specified in claim one.

### DESCRIPTION OF THE INVENTION

The object of the present invention is on one hand a feeder and on the other a system in which the feeder is included, and finally a method for real-time measurement of the growth and/or evolution in the weight of animals according to the difference in the weight of an animal at two different times.

The feeder comprises: a sealed weighing platform provided with sensors and transmitters, the platform placed with respect to a feeder such that it detects the weight of an animal when it is going to eat and places its front legs on the weighing platform.

The weighing platform is water-, gas- and waste-tight, protecting the sensors from the environment outside the device, which in farms is highly corrosive due to moisture, waste and gases (such as NH₃). The platform has a gas outlet or duct meant to:
- Allow a quick change in the volume of the sealed body when an external force acts on it (front legs of an animal), essential for a correct reading of the sensors in response to the weight and movement of the animal on the platform; and
- By means of a flow regulator mechanism associated to the outlet/duct, allow a correct attenuation of the continuous perturbations caused by the constant movement of the animal on the platform. The design of the sealed enclosure of said sealed body involves a specific design of the side walls that allows, through a bending effect, a fast change in the volume to obtain an accurate measurement of the force exerted (weight on the platform), despite a substantial proportion of said force being temporarily transmitted to the walls of the sealed body.

Each feeder comprises at least a radio frequency reader, a controller, and a data transmitter. It also has at least a sealed weighing platform associated with each feeder comprising a series of force sensors that send the weight measurement data to the controller.

The radio frequency reader of the feeder identifies the animal being weighed by the radio frequency emitter the animal bears, associating the two readings.

The controller processes the signals received from the force sensors and those send by the feeder, and the weighing signals are processed using a perturbation filtration algorithm as well as specific software; and associated database calculates the daily weight of the animal by processing several measurements made on the day and the record of measurements stored in the database.

The data transmitter transmits the animal's weight and identification data, preferably in a wireless manner, from each feeder.

An assembly of feeders can be integrated in a system that, in addition to the feeders, comprises data transmission means for transmitting the data through a data network to a central computer.

The method for real-time measurement of animal growths is based on a method that estimates the weight of an animal each day, such that knowing the daily weight of each animal allows knowing its growth or the evolution of its weight.

Since the animal is constantly moving during the feeding process, and may be interacting with other animals or with the feeder, generating forces foreign to the weighing process and since the weighing is performed according to the weight transmitted by the front legs, the daily weight estimation method must be specifically designed to overcome all of the aforementioned difficulties.

The daily weight estimation method consists of three stages, of which the first and second stages are performed in the processor installed in the feeder, while the third stage is performed in a central or host computer that stores each day all the weights measured for each animal by all the feeders connected to said host.

The essence of the method in stages 1 and 2 consists in eliminating weight readings that are affected by perturbations that falsify the measurement, without eliminating the variation specific to a weighing with a dynamic type signal (the movement of the animal itself).

### Stage one

The basic aim of this first stage is to establish an initial approximate yet realistic estimation of the weight on the front legs of the animal present in the feeder when this animal is feeding and resting on the weighing platform; the accuracy of the measurement can be increased using correlation data between the weight on the front legs and the total weight of the animal. This estimation is used to calculate the parameters that allow determining whether an instantaneous measurement in stage two is acceptable (indicated as animal stable or unstable).

The readings from the sensors are obtained continuously (typically 2 readings / second).

If the first step is satisfactory (enough number of readings not significantly perturbed) the result obtained is a preliminary estimate of the weight on the front legs (partial weight of stage one) and stage two may begin. If it is not satisfactory, stage one is restarted.

### Stage two

In this stage a more reliable estimate is obtained starting from a first estimate of the animal's weight and applying the criterion used to establish whether an instantaneous measurement is acceptable (animal stability).

The second step may finish or not depending on whether enough measurements are obtained to make a final estimate of the animal's weight.

If the second stage is not finished, the process returns to stage one and starts again.

### Stage three

Stage three is performed in the central computer once a day and is based on a statistical process on all the measurements performed in the previous 24 hours (this interval can be parameterised) to obtain the best estimate of the weight.

In addition the feeder can be an automated feeder, such that depending on the growth of each animal a precision feeding can be established, that is, one in which the food supplied by the feeder is adjusted in real time (preferable each day) to the nutritional needs (particularly protein) of each animal in an individualised manner.

Thus, the above-described system provides:
- Real-time measurement of the growth (weight increase) and individual weight of four-legged animals, without having to confine and isolate them from other animals using an enclosure means to perform the measurements;
- A device that can be used by a multiplicity of animals, allowing feeding more animals with the proposed system than with the feeder in confinement, since the time required for the animal to enter and exit are near zero in the proposed system;
- A much simpler system lacking doors, actuators and locking elements;
- A system that allows the animal to enter and exit the automatic feeder in full freedom (open space), without stress or the need to learn the operation of the enclosure, as this learning process often represents a significant drawback to the operation and functional success of the system;
- A system that can be used for both small groups of animals in which each system has a feeding system as proposed or large groups in which a sufficiently large assembly of feeders is provided which the animals can access indistinctly.

Throughout the description and claims the term "comprises" and the variants thereof are not meant to exclude other technical features, additives, components or stages. For a person skilled in the art additional objects, advantages and features of the invention will become apparent in view of the description and the use of the invention.

### BRIEF DESCRIPTION OF THE FIGURES

To complete the description being made and in order to aid a better understanding of the features of the invention, according to a preferred example thereof, a set of drawings is accompanied forming an integral part of the description where for purposes of illustration only and in a non-limiting sense the following is shown.
Figure 1 shows a schematic representation of the system for real-time measurement of animal growth.
Figure 2 shows a cross-sectional view of the weighing platform.
Figure 3 shows a flow chart of the actions included in the first stage of the method for estimating the daily weight of each animal.
Figure 4 shows a flow chart of the actions included in the second stage.
Figure 5 shows a flow chart of the actions included in the third stage.

### DETAILED DESCRIPTION OF THE PREFERRED EMBODIMENT OF THE INVENTION

A preferred embodiment of the invention is described below with reference to the figures.

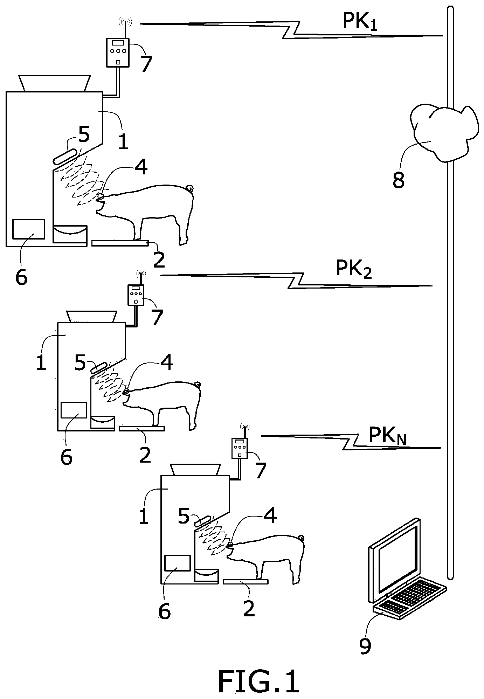

Figure 1 shows that the system comprises:
- One or more feeders (1).
- At least one sealed weighing platform (2) associated to each feeder (1), where the weighing platform comprises a series of force sensors (3) and a transmitter that sends the data of the weight measurement.
- Data transmission means (8), preferably wireless, to transmit the data to a central computer (9).

Where:
- Each feeder (1) is provided with:
- A radio frequency reader (5) that identifies the animal being weight, associating the two readings.
- A controller (6) that:
   ▪ Processes the signals received from the force sensors (3) in the weighing platforms (2) and those provided by the feeder, wherein the processing of the weighing signals is performed by a perturbation filtering algorithm;
   ▪ Calculates the daily weight of the animal by processing multiple weight measurements performed by the device in the day and considering the records of measurements stored in the database, using specific software and an associated database.
- A data transmitter (7) in each feeder that transmits, preferably wirelessly, the measurement of the weight and the identification of the corresponding animal.

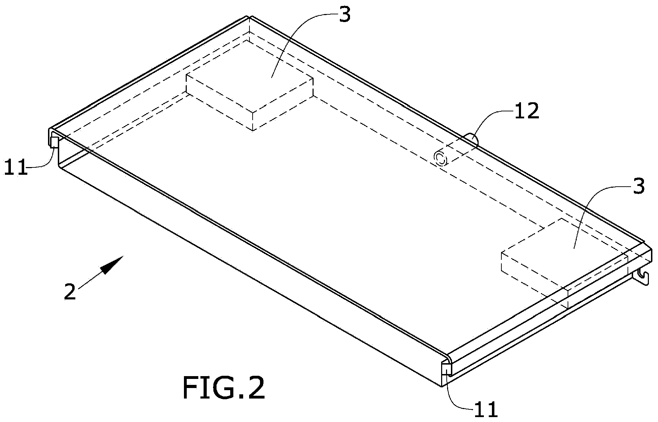

Figure 2 shows the constructive features of each sealed weighing platform (2) that comprises a casing provided with at least one gas outlet and flow regulation duct (12) and side walls (11) made of a highly flexible material that also provides a hermetic seal. Force sensors (3) are housed inside the casing.

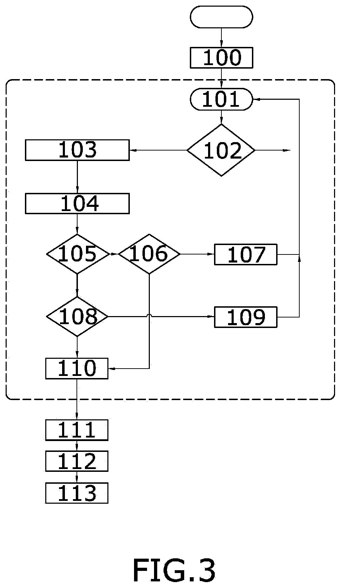

Figure 3 shows the flow chart of the actions performed in order to execute stage one of the daily weight estimation method, which comprises the following steps:
- starting (100) the first stage,
- reading (101) the weight sensor,
- checking (102) that the food request sensor has been activated at least once, otherwise returning to the reading step (101), and if it has been activated proceeding to the next step,
- executing (103) the algorithm for transforming the instantaneous reading to a weight (mV-Kg),
- executing (104) the algorithm that generates the stability limits for the animal,
- checking (105) if the animal is stable, and if so proceeding to the next step,
- checking (106) if there are sufficient samples, otherwise gathering (107) additional samples and returning to the reading step (101) and, if affirmative, reaching the end (110) of the first stage;
- if the stability check (105) is negative, checking (108) if there are enough samples, otherwise resetting (109) the sample counter and returning to the reading step (101), and if affirmative reaching the end (110) of the first stage.

At the end of the first stage the partial weight is calculated (111) and then the sample counter is reset (112), finally proceeding to the start (113) of stage two.

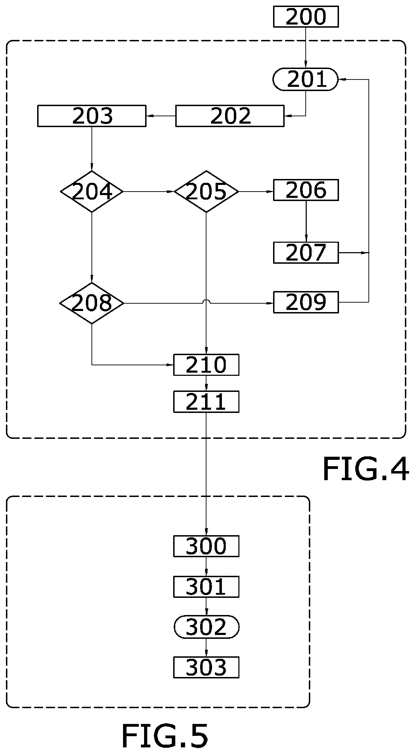

Figure 4 shows the flow chart of the actions performed in order to execute stage two of the daily weight estimation method, which comprises the following steps:
- starting (200) the second stage,
- reading (201) the weight sensor,
- executing (202) the algorithm for transforming the instantaneous reading to a weight (mV-Kg),
- executing (203) the algorithm that generates the stability limits for the animal,
- checking (204) if the animal is stable, and if so proceeding to the next step,
- checking (205) if there are sufficient samples, otherwise gathering (206) additional samples and returning to the reading step (201) and, if affirmative, reaching the partial weight recalculation step (210) of this second stage,
- if the stability check (204) is negative, checking (208) if there are enough samples, otherwise resetting (209) the sample counter and returning to the reading step (201), and if affirmative, reaching the partial weight recalculation step (210) of this second stage,
- after the partial weight recalculation step (210) the second stage is completed (211).

Figure 5 shows the flow chart of the actions performed to execute stage three of the daily weight estimation method comprising the following steps:
- calculating (300) the partial weight,
- resetting (301) the sample counter,
- sending (302) the weight line,
- restarting (303) in stage one.

Having sufficiently described the nature of the present invention and its reduction to practice, it must be noted that it is possible to reduce it to practice in other manners that are different in detail from the example of embodiment without departing from the essence thereof, for which the protection sought will also apply provided the essence of the invention is not changed, altered or modified, as comprised within the scope of the appended claims.

## Claims

1. Feeder for real-time measurement of the growth and/or evolution of the weight of animals by the difference in weight of an animal at two different times, wherein the system performs the measurement on the basis of the weight transmitted by the front legs to a weighing platform, wherein the feeder comprises:
- At least one radio frequency reader (5), a controller (6), and at least one data transmitter (7);
- At least one sealed weighing platform (2) associated with each feeder that comprises a number of force sensors (3), sending the weight measurement data to the controller (6);
**characterised in that** each sealed weighing platform comprises a casing having at least one gas outlet and flow regulation duct (12) and side walls (11) made of a flexible material that also provides a hermetic seal, the casing housing force sensors (3).

2. Feeder for real-time measurement of the growth of animals, according to claim 1, **characterised in that** the radio frequency reader (5) identifies the animal being weight and associates the two readings.

3. Feeder for real-time measurement of the growth of animals, according to claim 1, **characterised in that** the controller (6) processes the signals received from the sensors and those sent by the feeder, wherein the processing of the weighing signals is performed using a perturbation filtering algorithm, and calculates the daily weight of the animal by processing multiple measurements of the weight performed by the device on the day and taking into account the records of measurements stored in the database, using specific software and an associated database.

4. System for real-time measurement of the growth and/or evolution of the weight of animals that uses a feeder according to any of the preceding claims 1 to 3 and comprises means for data transmission through a data network (8) connected to a central computer (9).

5. Method for real-time measurement of animal growth performed with the system according to any of the preceding claims, **characterised in that** it comprises a method for estimating the daily weight of the animals which comprises three stages:
- Stage one, which establishes an initial estimate of the weight on the front legs of the animal present at the time in the feeder, which is eating and resting on the weighing platform, optionally using correlation data between the weight exerted by the front legs of the animal and its total weight to improve the accuracy of the measurement;
- Stage two, which establishes a more reliable estimate as it starts from a first estimate of the animal's weight and applies a criterion to determine whether an instantaneous measurement is acceptable;
- Stage three, based on a statistical process performed on all the weight measurements obtained in the preceding 24 hours;
wherein stages one and two take place in the processor provided in the feeder, while stage three is performed in a central computer or host that each day stores all the weight measurements of each animal performed by the feeders that are connected to the host, where both stages 1 and 2 involve eliminating the weight readings that are affected by perturbations.

6. Method for real-time measurement of animal growth according to claim 5, **characterised in that** stage one of the method comprises the following steps:
- starting (100) the first stage,
- reading (101) the weight sensor,
- checking (102) that the food request sensor has been activated at least once, otherwise returning to the reading step (101), and if it has been activated proceeding to the next step,
- executing (103) the algorithm for transforming the instantaneous reading to a weight (mV-Kg),
- executing (104) the algorithm that generates the stability limits for the animal;
- checking (105) if the animal is stable, and if so proceeding to the next step,
- checking (106) if there are sufficient samples, otherwise gathering (107) additional samples and returning to the reading step (101) and, if affirmative, reaching the end (110) of the first stage;
- if the stability check (105) is negative, checking (108) if there are enough samples, otherwise resetting (109) the sample counter and returning to the reading step (101), and if affirmative reaching the end (110) of the first stage;
at the end of the first stage the partial weight is calculated (111) and then the sample counter is reset (112), finally proceeding to the start (113) of stage two.

7. Method for real-time measurement of animal growth according to claim 5, **characterised in that** stage two of the daily weight estimation method comprises the following steps:
- starting (200) the second stage;
- reading (201) the weight sensor;
- executing (202) the algorithm for transforming the instantaneous reading to a weight (mV-Kg);
- executing (203) the algorithm that generates the stability limits for the animal;
- checking (204) if the animal is stable, and if so proceeding to the next step,
- checking (205) if there are sufficient samples, otherwise gathering (206) additional samples and returning to the reading step (201) and, if affirmative, reaching the partial weight recalculation step (210) of this second stage;
- if the stability check (204) is negative, checking (208) if there are enough samples, otherwise resetting (209) the sample counter and returning to the reading step (201), and if affirmative, reaching the partial weight recalculation step (210) of this second stage;
- after the partial weight recalculation step (210) the second stage is completed (211).

8. Method for real-time measurement of animal growth according to claim 5, **characterised in that** stage three of the daily weight estimation method comprises the following steps:
- calculating (300) the partial weight;
- resetting (301) the sample counter;
- sending (302) the weight line;
- restarting (303) in stage one.

## Patentansprüche

1. Füttervorrichtung zur Echtzeitmessung des Wachstums und/oder der Entwicklung des Gewichts von Tieren durch den Unterschied im Gewicht eines Tieres zu zwei verschiedenen Zeitpunkten, wobei das System die Messung auf der Grundlage des von den Vorderbeinen auf eine Wägeplattform übertragenen Gewichts durchführt, wobei die Füttervorrichtung umfasst:
- mindestens einen Funkfrequenzleser (5), einen Controller (6) und mindestens einen Datensender (7);
- mindestens eine mit jeder Füttervorrichtung verbundene abgedichtete Wägeplattform (2), die eine Anzahl von Kraftsensoren (3) umfasst, die die Gewichtmessungsdaten an den Controller (6) senden,
**dadurch gekennzeichnet, dass** jede abgedichtete Wägeplattform ein Gehäuse aufweist, das mindestens einen Gasauslass und einen Durchflussregelkanal (12) und Seitenwände (11) aus einem flexiblen Material aufweist, das auch eine hermetische Abdichtung bereitstellt, wobei das Gehäuse Kraftsensoren (3) beherbergt.

2. Füttervorrichtung zur Echtzeitmessung des Wachstums von Tieren nach Anspruch 1, **dadurch gekennzeichnet, dass** der Funkfrequenzleser (5) das Tier, das gewogen wird, identifiziert und die zwei Ablesungen assoziiert.

3. Füttervorrichtung zur Echtzeitmessung des Wachstums von Tieren nach Anspruch 1, **dadurch gekennzeichnet, dass** der Controller (6) die von den Sensoren empfangenen und die von der Füttervorrichtung gesendeten Signale verarbeitet, wobei die Verarbeitung der Wägesignale unter Verwendung eines Störungsfilterungsalgorithmus durchgeführt wird, und das tägliche Gewicht des Tieres durch die Verarbeitung mehrerer Messungen des Gewichts, die durch die Vorrichtung an dem Tag durchgeführt werden, und unter Berücksichtigung der Aufzeichnungen von Messungen, die in der Datenbank gespeichert sind, unter Verwendung spezifischer Software und einer zugehörigen Datenbank berechnet.

4. System zur Echtzeitmessung des Wachstums und/oder der Entwicklung des Gewichts von Tieren, das eine Füttervorrichtung nach einem der vorhergehenden Ansprüche 1 bis 3 verwendet und Mittel zur Datenübertragung über ein mit einem zentralen Rechner (9) verbundenes Datennetzwerk (8) umfasst.

5. Verfahren zur Echtzeitmessung des Tierwachstums, das mit dem System nach einem der vorhergehenden Ansprüche durchgeführt wird, **dadurch gekennzeichnet, dass** es ein Verfahren zur Schätzung des Tagesgewichts der Tiere umfasst, das drei Stufen umfasst:
- Stufe eins, die eine anfängliche Schätzung des Gewichts an den Vorderbeinen des sich zu dem Zeitpunkt in der Füttervorrichtung befindlichen Tieres, das frisst und auf der Wägeplattform ruht, aufstellt, gegebenenfalls unter Verwendung von Korrelationsdaten zwischen dem Gewicht, das von den Vorderbeinen des Tieres ausgeübt wird, und seinem Gesamtgewicht, um die Genauigkeit der Messung zu verbessern;
- Stufe zwei, die eine zuverlässigere Schätzung aufstellt, da sie von einer ersten Schätzung des Gewichts des Tieres ausgeht und ein Kriterium anwendet, um zu bestimmen, ob eine momentane Messung akzeptabel ist;
- Stufe drei, basierend auf einem statistischen Prozess, der an allen in den vorangegangenen 24 Stunden erhaltenen Gewichtsmessungen durchgeführt wird;
wobei die Stufen eins und zwei in dem in der Füttervorrichtung vorgesehenen Prozessor stattfinden, während Stufe drei in einem zentralen Rechner oder einem Host durchgeführt wird, der jeden Tag alle Gewichtsmessungen jedes Tieres speichert, die von den mit dem Host verbundenen Füttervorrichtungen durchgeführt werden, wobei beide Stufen 1 und 2 das Ausschließen der Gewichtsablesungen, die von Störungen beeinträchtigt sind, beinhalten.

6. Verfahren zur Echtzeitmessung des Tierwachstums nach Anspruch 5, **dadurch gekennzeichnet, dass** Stufe eins des Verfahrens die folgenden Schritte umfasst:
- Beginnen (100) der ersten Stufe,
- Lesen (101) des Gewichtssensors,
- Überprüfen (102), dass der Futteranforderungssensor mindestens einmal aktiviert wurde, andernfalls Zurückkehren in den Leseschritt (101), und falls er aktiviert wurde, Fortschreiten zu dem nächsten Schritt,
- Ausführen (103) des Algorithmus zum Umwandeln der momentanen Ablesung in ein Gewicht (mV-kg),
- Ausführen (104) des Algorithmus, der die Stabilitätsgrenzen für das Tier erzeugt;
- Überprüfen (105), ob das Tier stabil ist, und wenn ja, Fortschreiten zu dem nächsten Schritt,
- Überprüfen (106), ob ausreichend Proben vorhanden sind, andernfalls Sammeln (107) zusätzlicher Proben und Rückkehr zu dem Leseschritt (101) und, falls affirmativ, Erreichen des Endes (110) der ersten Stufe;
- falls die Stabilitätsprüfung (105) negativ ist, Überprüfen (108), ob ausreichend Proben vorhanden sind, andernfalls Zurücksetzen (109) des Probenzählers und Rückkehr zu dem Leseschritt (101), und falls affirmativ, Erreichen des Endes (110) der ersten Stufe;
am Ende der ersten Stufe wird das Teilgewicht berechnet (111) und dann wird der Probenzähler zurückgesetzt (112), schließlich Fortschreiten zum Beginn (113) der Stufe zwei.

7. Verfahren zur Echtzeitmessung des Tierwachstums nach Anspruch 5, **dadurch gekennzeichnet, dass** Stufe zwei des täglichen Gewichtsschätzungsverfahrens die folgenden Schritte umfasst:
- Beginnen (200) der zweiten Stufe;
- Lesen (201) des Gewichtssensors;
- Ausführen (202) des Algorithmus zum Umwandeln der momentanen Ablesung in ein Gewicht (mV-kg);
- Ausführen (203) des Algorithmus, der die Stabilitätsgrenzen für das Tier erzeugt;
- Überprüfen (204), ob das Tier stabil ist, und wenn ja, Fortschreiten zu dem nächsten Schritt,
- Überprüfen (205), ob ausreichend Proben vorhanden sind, andernfalls Sammeln (206) zusätzlicher Proben und Rückkehr zu dem Leseschritt (201) und, falls affirmativ, Erreichen des Teilgewicht-Neuberechnungsschritts (210) dieser zweiten Stufe;
- falls die Stabilitätsprüfung (204) negativ ist, Überprüfen (208), ob ausreichend Proben vorhanden sind, andernfalls Zurücksetzen (209) des Probenzählers und Rückkehr zu dem Leseschritt (201), und falls affirmativ, Erreichen des Teilgewicht-Neuberechnungsschritts (210) dieser zweiten Stufe;
- nach dem Teilgewicht-Neuberechnungsschritt (210) ist die zweite Stufe beendet (211).

8. Verfahren zur Echtzeitmessung des Tierwachstums nach Anspruch 5, **dadurch gekennzeichnet, dass** Stufe drei des täglichen Gewichtsschätzungsverfahrens die folgenden Schritte umfasst:
- Berechnen (300) des Teilgewichts;
- Zurücksetzen (301) des Probenzählers;
- Senden (302) der Gewichtslinie;
- Neustart (303) in Stufe eins.

## Revendications

1. Mangeoire pour la mesure en temps réel de la croissance et/ou de l'évolution du poids des animaux par la différence de poids d'un animal à deux moments différents, dans laquelle le système effectue la mesure sur la base du poids transmis par les pattes avant à une plate-forme de pesage, la mangeoire comprenant :
- un ou plusieurs lecteurs de fréquence (5), un contrôleur (6), et un ou plusieurs émetteurs de données (7) ;
- une ou plusieurs plates-formes de pesage fermées (2) associées à chaque mangeoire, comprenant plusieurs capteurs de force (3), qui envoient les données de mesure du poids au contrôleur (6) ;
**caractérisée en ce que** chaque plate-forme de pesage fermée comprend un corps comportant une ou plusieurs sorties de gaz et conduit de régulation de débit (12) et parois latérales (11) constituées d'un matériau flexible qui assure également un joint hermétique, le corps contenant des capteurs de force (3).

2. Mangeoire pour la mesure en temps réel de la croissance des animaux, selon la revendication 1, **caractérisée en ce que** le lecteur de radiofréquence (5) identifie l'animal en train d'être pesé, et associe les deux valeurs.

3. mangeoire pour la mesure en temps réel de la croissance d'animaux, selon la revendication 1, **caractérisée en ce que** le contrôleur (6) traite les signaux reçus des capteurs et ceux envoyés par la mangeoire, moyennant quoi le traitement des signaux de pesage est réalisé en utilisant un algorithme de filtrage de perturbation, et calcule le poids quotidien de l'animal en traitant plusieurs mesures du poids réalisées par le dispositif ce jour-là et en tenant compte des registres des mesures enregistrés dans la base de données, en utilisant un logiciel spécifique et une base de données associée.

4. Système pour la mesure en temps réel de la croissance et/ou de l'évolution du poids d'animaux utilisant une mangeoire selon l'une des revendications 1 à 3 précédentes, et comprenant des moyens pour la transmission des données par un réseau de données (8) raccordé à un ordinateur central (9).

5. Procédé pour la mesure en temps réel de la croissance d'un animal réalisé avec le système selon l'une quelconque des revendications précédentes, **caractérisé en ce qu'**il comprend un procédé pour estimer le poids quotidien des animaux qui comprend trois stades
- Le premier stade, qui établit une estimation initiale du poids sur les pattes avant de l'animal présent à ce moment-là dans la mangeoire, qui mange ou se repose sur la plate-forme de pesage, utilisant éventuellement les données de corrélation entre le poids exercé par les pattes avant de l'animal et son poids total pour améliorer la précision de la mesure ;
- Le deuxième stade, qui établit une estimation plus fiable car elle part d'une première estimation du poids de l'animal et applique un critère pour déterminer si une mesure instantanée est acceptable ;
- Le troisième stade, basé sur un processus statistique réalisé sur l'ensemble des mesures de poids obtenues dans les 24 heures précédentes ;
dans lequel les premier et deuxième stades ont lieu dans le processeur disposé dans la mangeoire, alors que le troisième stade est réalisé dans un ordinateur central ou hôte qui enregistre chaque jour toutes les mesures du poids de chaque animal réalisées par les mangeoires connectées à l'hôte, le premier et deuxième stades impliquant l'élimination des lectures du poids affectées par des perturbations.

6. Procédé pour la mesure en temps réel de la croissance d'un animal selon la revendication 5, **caractérisée en ce que** le premier stade du procédé comprend les étapes suivantes :
- démarrage (100) du premier stade,
- lecture (101) du capteur de poids,
- contrôle (102) que le capteur de demande d'alimentation a été activé au moins une fois, retournant autrement à l'étape de lecture (101), et s'il a été activé, passage à l'étape suivante,
- exécution (103) de l'algorithme pour transformer la lecture instantanée en poids (mV-Kg),
- exécution (104) de l'algorithme qui génère les limites de stabilité pour l'animal ;
- contrôle (105) que l'animal est stable, et si cela est le cas, passage à l'étape suivante,
- contrôle (106) de la présence d'échantillons suffisants, ou collecte (107) d'échantillons supplémentaires et retour à l'étape de lecture (101) et, si cela est affirmatif, atteinte de la fin (110) du premier stade ;
- si le contrôle de stabilité (105) est négatif, contrôle (108) de la présence d'échantillons suffisants, ou réinitialisation (109) du compteur d'échantillons et retour à l'étape de lecture (101) et, si cela est affirmatif, atteinte de la fin (110) du premier stade ;
à la fin du premier stade, le poids partiel est calculé (111) et le compteur d'échantillons est réinitialisé (112), passant finalement au début (113) du deuxième stade.

7. Procédé pour la mesure en temps réel de la croissance d'un animal selon la revendication 5, **caractérisée en ce que** le deuxième stade du procédé d'estimation du poids quotidien comprend les étapes suivantes :
- démarrage (200) du deuxième stade ;
- lecture (201) du capteur de poids ;
- exécution (202) de l'algorithme pour transformer la lecture instantanée en poids (mV-Kg) ;
- exécution (203) de l'algorithme qui génère les limites de stabilité pour l'animal ;
- contrôle (204) que l'animal est stable, et si cela est le cas, passage à l'étape suivante,
- contrôle (205) de la présence d'échantillons suffisants, ou collecte (206) d'échantillons supplémentaires et retour à l'étape de lecture (201) et, si cela est affirmatif, atteinte de l'étape de recalcul du poids partiel (210) de ce deuxième stade ;
- si le contrôle de stabilité (204) est négatif, contrôle (208) de la présence d'échantillons suffisants, ou réinitialisation (209) du compteur d'échantillons et retour à l'étape de lecture (201) et, si cela est affirmatif, atteinte de l'étape de recalcul du poids partiel (210) de ce deuxième stade ;
- après l'étape de recalcul du poids partiel (210) le deuxième stade est terminé (211).

8. Procédé pour la mesure en temps réel de la croissance d'un animal selon la revendication 5, **caractérisée en ce que** le troisième stade du procédé d'estimation du poids quotidien comprend les étapes suivantes :
- calcul (300) du poids partiel ;
- réinitialisation (301) du compteur d'échantillons ;
- envoi (302) de la ligne de poids ;
- redémarrage (303) au premier stade.
